# EUROPEAN PATENT SPECIFICATION

(11) **EP 2 036 805 B1**
(45) Date of publication and mention of the grant of the patent: **03.08.2011**
(21) Application number: 08009968.2
(22) Date of filing: 30.05.2008
(51) Int. Cl.: B62J 17/02, B62J 99/00

(54) **Vehicle with meter unit**
Fahrzeug mit Anzeigetafel
Véhicule avec panneau d'affichage

(30) Priority: 14.09.2007 JP 2007239290
(43) Date of publication of application: 18.03.2009
(73) Proprietor: Yamaha Hatsudoki Kabushiki Kaisha, Shizuoka-ken Shizuoka 438-8501 (JP)
(72) Inventor: Tominaga, Shuji c/o Yamaha Hatsudoki Kabushiki Kaisha, Shizuoka-ken 438-8501 (JP); Taniguchi, Takashi c/o Yamaha Hatsudoki Kabushiki Kaisha, Shizuoka-ken 438-8501 (JP); Mimasa, Yoshiyasu c/o Yamaha Hatsudoki Kabushiki Kaisha, Shizuoka-ken 438-8501 (JP); Kanou, Yasunobu c/o Yamaha Hatsudoki Kabushiki Kaisha, Shizuoka-ken 438-8501 (JP)
(74) Representative: Grünecker, Kinkeldey, Stockmair & Schwanhäusser Anwaltssozietät

(56) References cited:
- EP-A- 1 063 160
- EP-A- 1 496 241
- JP-A- 2004 098 833
- US-A1- 2001 028 176

## Description

The present invention relates to a vehicle, in particular a straddle type vehicle which can be driven by its driver in a straddle position so as to straddle a frame of the vehicle, such as a motorcycle, including a meter disposed in a front part of a vehicle body, according to the preamble of claim 1. Such a vehicle is known from JP-A-2004-098833.

In JP-A-2002-19663, a scooter type motorcycle has a meter visor raised to cover a front part of a meter so that direct incidence of sunlight and light from illuminating lamps (street lightings) into the meter disposed in a front panel in a front part of a vehicle body is inhibited. A windshield is disposed in front of the meter visor for preventing traveling winds from directly contacting a rider.

However, if the windshield is disposed in front of the meter visor as in a conventional device, the meter tends to be positioned rearward in the vehicle for a thickness of the meter visor, that is, closer to a rider. As a result, there is concern about a problem that an amount of eye movement of a rider for visually recognizing the meter becomes large in traveling.

The present invention is made in consideration of the conventional situation, and the objective is to provide a straddle type vehicle, by which the amount of eye movement of a rider for visually recognizing the meter can be made smaller.

Said objective is solved by a vehicle with the features defined in claim 1.

Yet further still, preferably the cover is constructed in a manner such that the driver can view forward through the window.

Preferably, the cover is an obscure cover with reduced transmittance.

Further, preferably the cover includes a lower screen disposed to cover the window of the meter visor and an upper screen disposed to form a surface above the lower screen and, preferably, continuous thereto.

Still further, preferably the transmittance of the lower screen is lower than the transmittance of the upper screen.

According to a preferred embodiment, a supporting stay is provided for supporting the upper screen, and wherein, preferably, the supporting stay is covered around by the meter visor.

According to another preferred embodiment, the supporting stay is formed into a substantially convex arch shape in which a center part in the vehicle width direction is positioned above both ends of the supporting stay.

According to yet another preferred embodiment, both the ends of the supporting stay form rearview mirror supports.

Preferably, the meter unit from its upside is covered by a cover part which, preferably, extends obliquely forward and downward with regard to the viewing direction of the driver of the vehicle.

Further, preferably the cover part is distanced to the cover covering a front portion of the window of the meter visor.

In the following, the present invention is explained in greater detail with respect to several embodiments thereof in conjunction with the accompanying drawings, wherein:
- FIG. 1: is a side view of a scooter type motorcycle (straddle type vehicle) according to an embodiment;
- FIG. 2: is a front view of the motorcycle;
- FIG. 3: is a rear view of the motorcycle;
- FIG. 4: is a side view of a front cover of the motorcycle;
- FIG. 5: is a front view of the front cover;
- FIG. 6: is a side view of a frame member disposed in the front cover;
- FIG. 7: is a front view of the frame member;
- FIG. 8: is a perspective view of a meter unit disposed on the front cover;
- FIG. 9: is a perspective view of a meter visor disposed on the meter unit;
- FIG. 10: is a perspective view of an upper screen disposed on the meter visor;
- FIG. 11: is a perspective view of a lower screen disposed on the meter visor;
- FIG. 12: is a perspective view of a windshield disposed on the front cover;
- FIG. 13: is a cross-sectional view taken along a line XIII-XIII in FIG. 5;
- FIG. 14: is a cross-sectional view taken along a line XIV-XIV in FIG. 5;
- FIG. 15: is a cross-sectional view taken along a line XV-XV in FIG. 5;
- FIG. 16: is a cross-sectional view taken along a line XVI-XVI in FIG. 5;
- FIG. 17: is a cross-sectional view taken along a line XVII-XVII in FIG. 5;
- FIG. 18: is a cross-sectional view taken along a line XVIII-XVIII in FIG. 5;
- FIG. 19: is a schematic view, showing a modified example of a window according to the embodiment; and
- FIG. 20: is a schematic view, showing another modified example of the window according the embodiment.

Among others, the following reference signs are used in the figures:
1: scooter type motorcycle (straddle type vehicle)
2: vehicle body frame
15: front cover (front part of a vehicle)
27: supporting stay
27a: right or left end
27b: rearview mirror support
27c: screen support (center part in the vehicle width direction)
35: meter unit
35d: cover part (part of a meter)
36: meter visor
36g: window
37: windshield (cover)
38: lower screen
39: upper screen

An embodiment will be described hereinafter with reference to attached drawings.

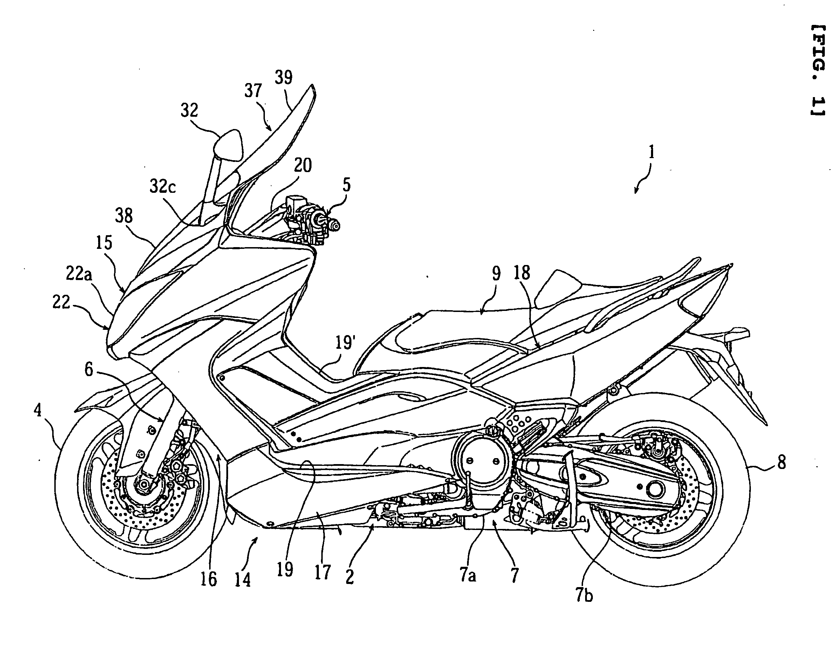

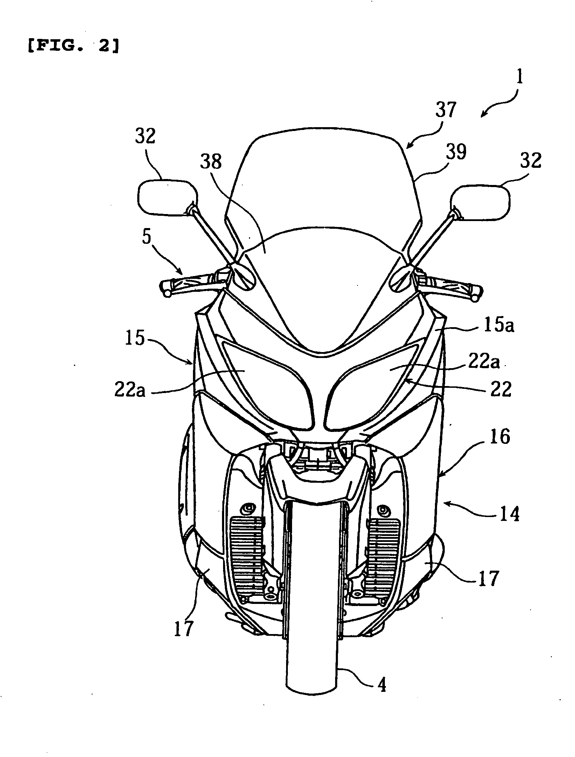

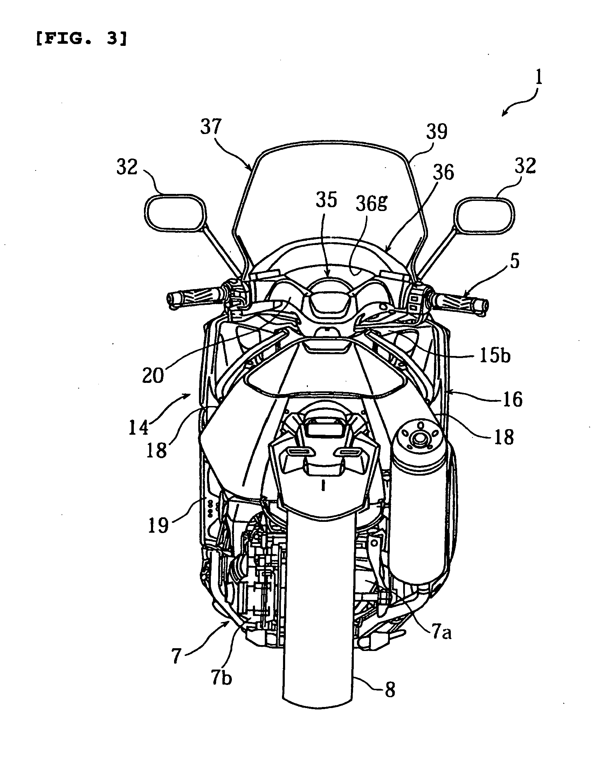

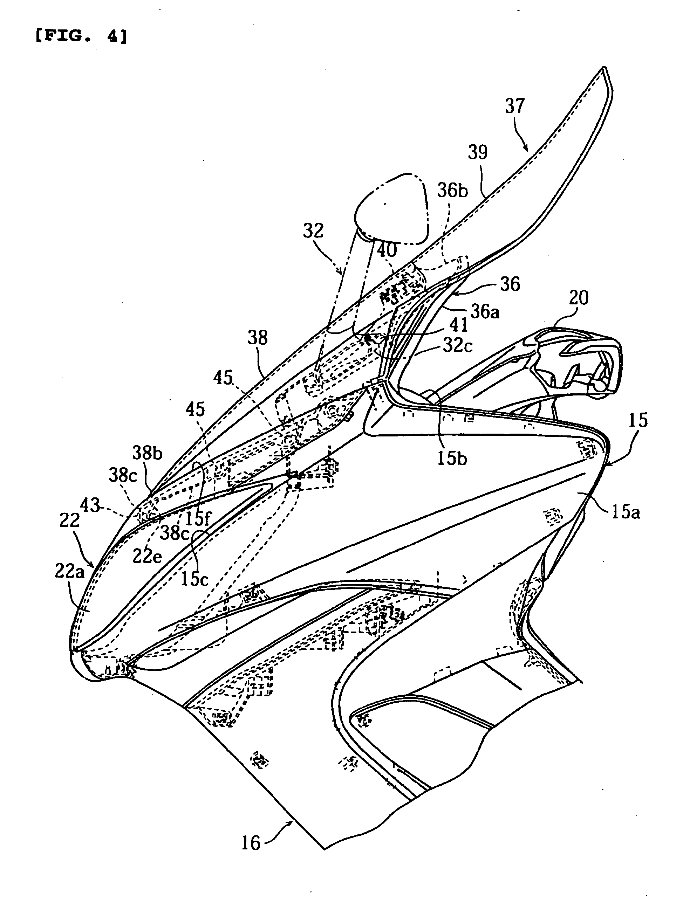

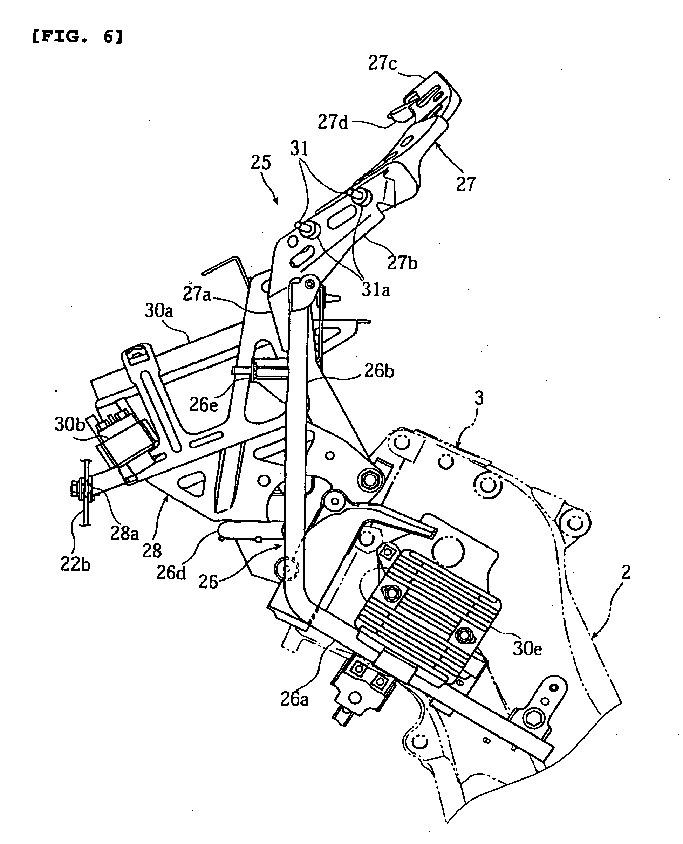

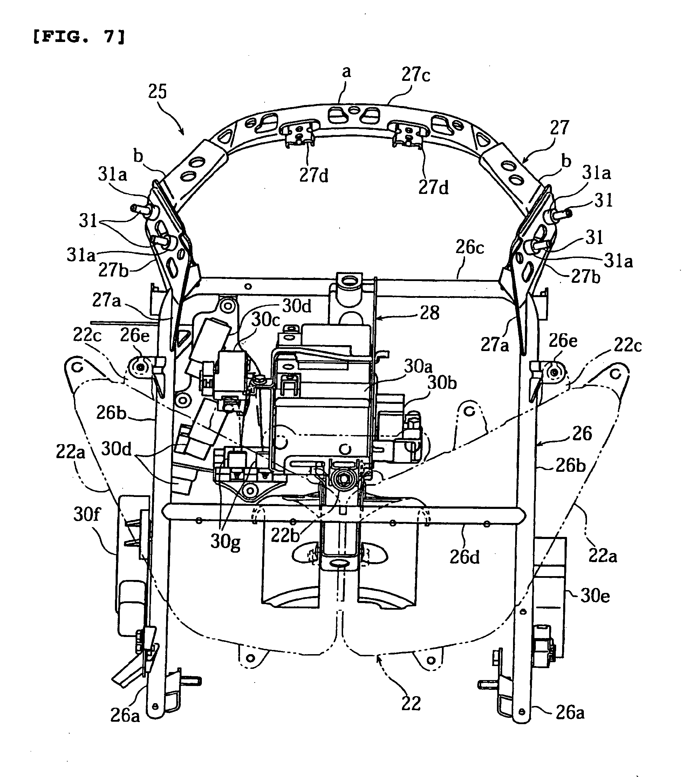

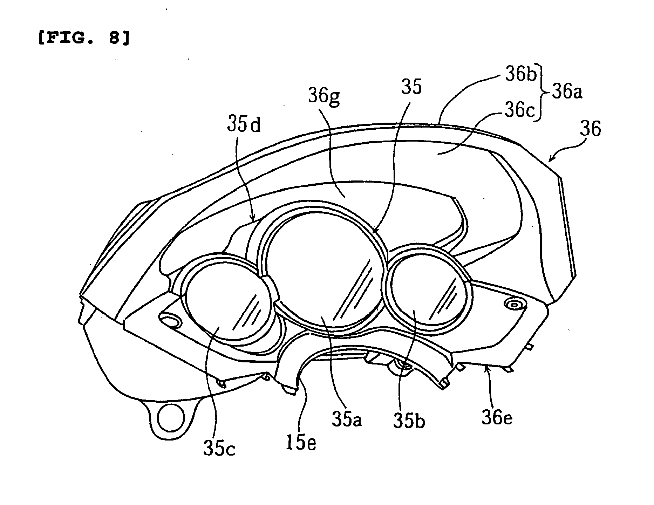

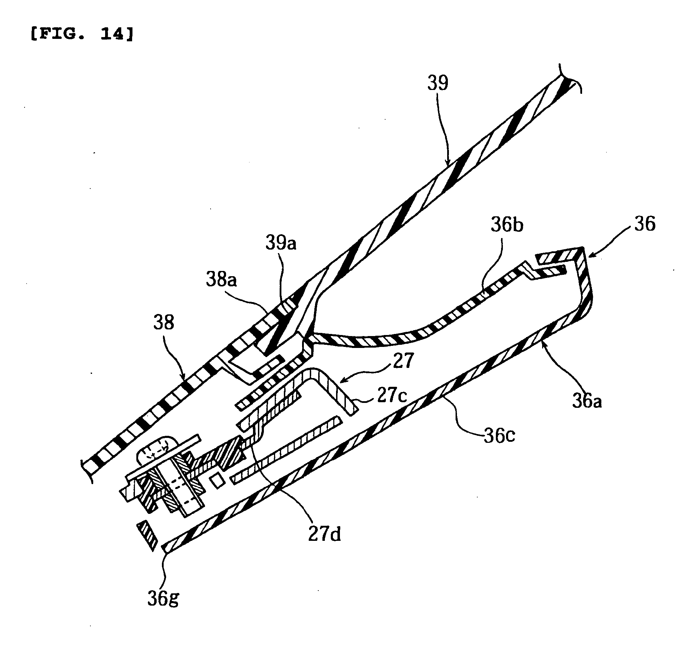

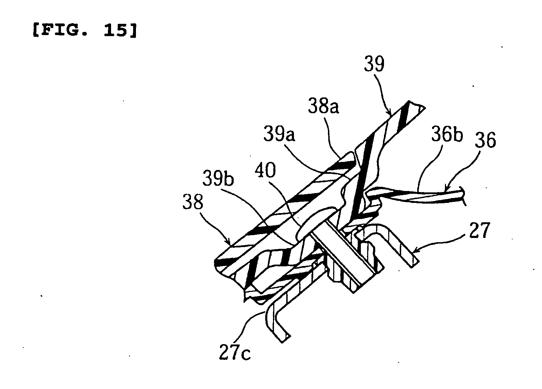

FIGs.1 through 20 illustrates a straddle type vehicle according to an embodiment. Generally, a straddle type vehicle has a body frame and a seat on which a rider can be seated straddling the body frame when being seated. The fore-and-aft and right-and-left directions in this embodiment mean the directions as seen from the rider seated on a seat unless particularly mentioned.

In the drawings, reference numeral 1 denotes a scooter type motorcycle (straddle type vehicle). The motorcycle 1 includes an underbone type vehicle body frame 2, front forks 6 supported by a head pipe 3 positioned at a front end of the vehicle body frame 2 in a manner such that they are steerable to right and left, an engine unit 7 installed in a center part of the vehicle body frame 2 in the fore-and-aft direction, and a seat 9 for tandem riding installed on the vehicle body frame 2 above the engine unit 7. A front wheel 4 is pivotally supported at lower ends of the front forks 6. Steering handlebars 5 are fixed to their upper ends. A rear wheel 8 is disposed at a rear end of the engine unit 7.

The engine unit 7 has an engine main body 7a fixed to the vehicle body frame 2, and a transmission casing 7b supported by the engine main body 7a swingably in the up-and-down direction for transmitting driving force of the engine to the rear wheel 8.

The vehicle body frame 2 is surrounded by a vehicle body cover 14 made of resin. The vehicle body cover 14 includes a front cover 15 for covering front parts of the front forks 6, leg shields 16 for covering front sides of legs of the rider, right and left side covers 18, 18 for covering lower peripheries of the seat 9 and right and left sides of the engine main body 7a, and right and left under covers 17, 17 for covering lower parts of the side covers 18.

A handlebar cover 20 is put on the steering handlebars 5 in a manner such that it surrounds outer peripheries of the steering handlebars 5.

Right and left low-step type footboards 19, 19 forming foot placing parts for the rider are disposed between the right and left side covers 18 and the under covers 17. A center tunnel part 19' swelling out upward in a tunnel shape is formed between the right and left footboards 19, 19.

The front cover 15 includes: an outer cover 15a for covering front, right and left parts of the head pipe 3 and the front forks 6; and an inner cover 15b disposed to cover rear upper ends of the outer cover 15a.

A pair of right and left headlight openings 15c, 15c are formed on the outer cover 15a. A headlight unit 22 in which right and left headlights 22a, 22a are unitarily formed is put on the right and left headlight openings 15c. Steering handlebar insertion holes 15e are formed in the inner cover 15b.

The front cover 15 is mounted on a frame member 25 disposed in front of the head pipe 3, and surrounds the frame member 25.

The frame member 25 includes a pipe member 26 which is formed generally in a portal shape in the vehicle front view, a supporting stay 27 in a batten plate shape fixed to upper parts of the pipe member 26, and a bracket 28 positioned in a center part in the vehicle width direction which is suspended over and fixed to the pipe member 26 and the head pipe 3.

Many kinds of electrical parts are mounted on the frame member 25 in a concentrated manner. Specifically, a battery 30a is installed in a center part of the bracket 28. A starter relay 30b is disposed on the left side of the battery 30a. A fuse box 30c, a plurality of relay assemblies 30d, and a plurality of sensors 30g are mounted on a right part of the bracket 28. Further, a regulator 30e is mounted on a left part of the pipe member 26, and a controller 30f is mounted on a right part.

A central upper boundary part 22b positioned in a center part of the headlight unit 22 in the vehicle width direction is fixed to a forward protrusion 28a of the bracket 28 by bolting. Right and left flanges 22c, 22c are fixed to supporting parts 26e, 26e of the pipe member 26 by bolting.

The pipe member 26 has right and left base parts 26a, 26a fixed to the vehicle body frame 2 by bolting, right and left vertical parts 26b, 26b extending upward from front ends of the right and left base parts 26a in front of the head pipe 3, an upper crossbar 26c and a lower crossbar 26d for coupling the right and left vertical parts 26b together at their upper ends and lower ends in the vehicle width direction.

The supporting stay 27 is formed in a convex arch shape such that a center part in the vehicle width direction is positioned above right and left parts. Specifically, the supporting stay 27 has right and left ends 27a, 27a fixed to the upper ends of the right and left vertical parts 26b of the pipe member 26, right and left rearview mirror supports 27b, 27b extending obliquely rearward upward from the right and left ends 27a, and an arc-shaped screen support 27c for connecting the right and left rearview mirror support 27b, 27b together.

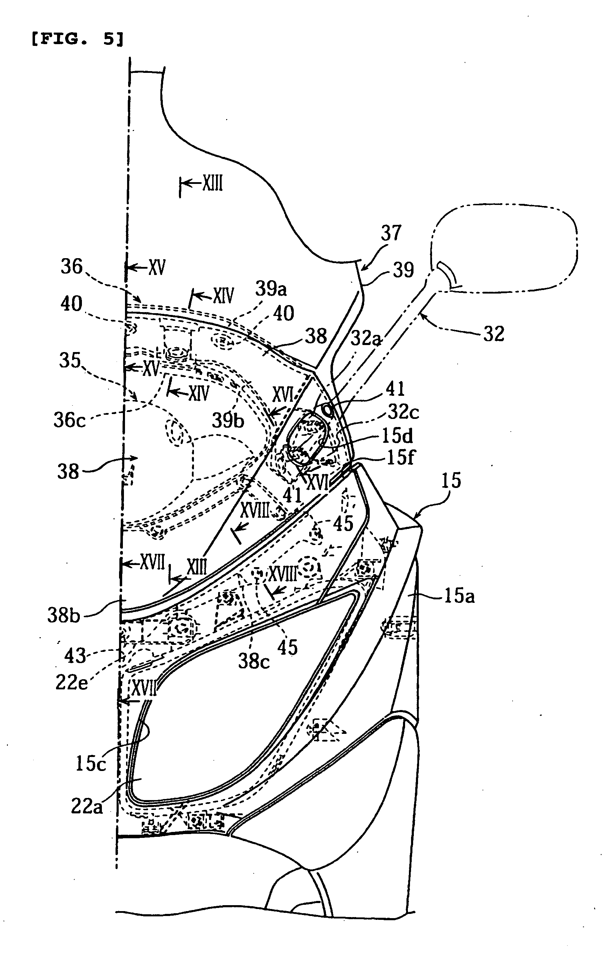

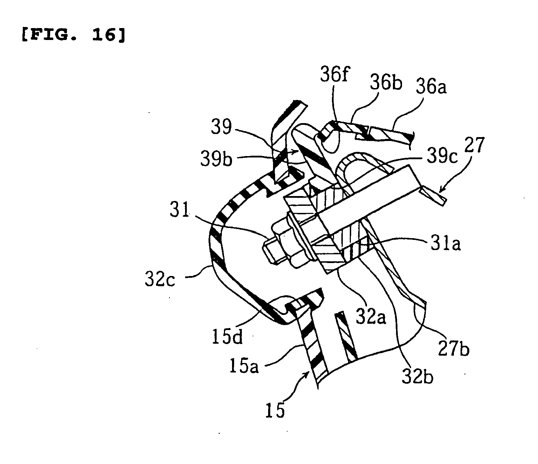

A pair of supporting bolts 31, 31 are fixed to each of the right and left rearview mirror support 27b, 27b to protrude outward. Bases 32a of right and left rearview mirrors 32 are fixed to the rearview mirror support 27b, 27b via dampers 32b by the supporting bolts 31 (see FIGs. 5 and 16).

Here, reference numeral 32c denotes a dustcover for blocking a space between the rearview mirror 32 and a rearview mirror mounting hole 15d formed in the outer cover 15a. The dustcover 32c is put on to fit in a peripheral part of the rearview mirror mounting hole 15d.

Positioning bosses 31a, 31a for positioning an upper screen 39 described later are formed on the right and left supporting bolts 31.

The motorcycle 1 includes a meter unit 35 disposed in a part of the front cover 15 more forward than the steering handlebars 5, a meter visor 36 disposed in front of the meter unit 35 for preventing direct incidence of sunlight and light from illuminating lamps (street lightings) into the meter unit 35, and a windshield (cover) 37 disposed in front of the meter visor 36 for preventing traveling winds from directly contacting the rider.

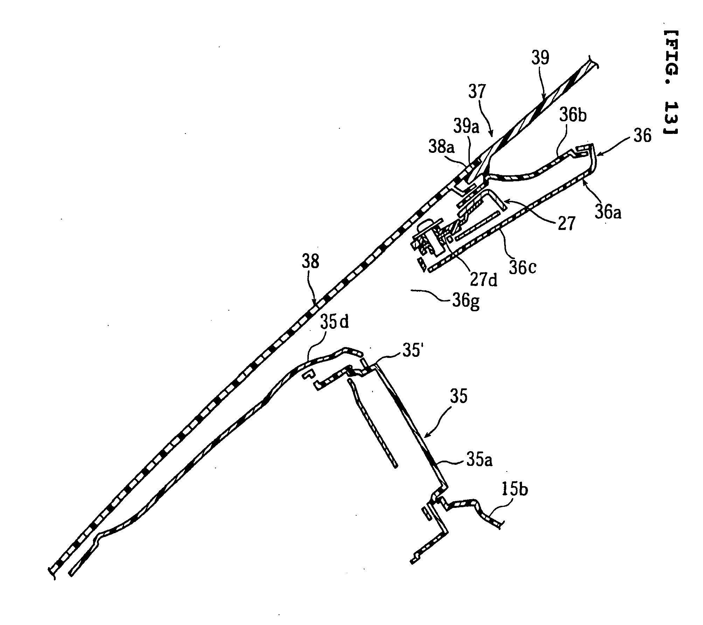

The meter unit 35 is constructed in a manner such that a speedometer 35a, a tachometer 35b, and various kinds of display meters 35c that are in circular shapes in different sizes are unitarily coupled. A rear periphery of the meter unit 35 is covered by the inner cover 15b. The meter unit 35 is covered by the cover part 35d from its upside. The cover part 35d extends obliquely forward and downward with regard to the viewing direction of the rider (see FIG. 13).

The meter visor 36 is fixed to a pair of right and left mounting pieces 27d, 27d by bolting. The mounting pieces 27d, 27d are formed to protrude forward on the screen support 27c of the supporting stay 27.

The meter visor 36 has a visor main body 36a formed in an arch shape similar to the supporting stay 27, and a supporting part 36e for coupling right and left lower ends of the visor main body 36a together.

The supporting part 36e supports a lower periphery of the meter unit 35. The cover part 35d of the meter unit 35 is disposed to couple front parts of the right and left lower ends of the visor main body 36a together.

The visor main body 36a is constructed with two separate bodies that are an upper visor member 36b for covering an upper surface of the supporting stay 27 and a lower visor member 36c for covering a lower surface thereof. The supporting stay 27 is covered around the visor main body 36a and invisible from the outside since it is submerged in the visor main body 36a. Mirror openings 36f, 36f are formed in parts of the upper visor member 36b facing the right and left rearview mirror support 27b, 27b.

The visor main body 36a is formed in an arch shape, and thereby a window 36g is formed in the meter visor 36. The cover part 35d is disposed to couple the front parts of the right and left lower ends of the visor main body 36a together. Therefore, the window 36g and the cover part 35d, as a whole, form a generally elliptic shape having a major axis extending in the vehicle width direction. The window 36g is positioned to extend forward from a part above the lens surfaces of the meter unit 35 as can be seen by the rider on the seat.

The lower visor member 36c of the visor main body 36a forms an arch shape extending obliquely rearward and upward from right and left peripheries of the cover part 35d, and is positioned to cover the meter unit 35 from its right and left sides and upside. Accordingly, it functions as a peak part. The lower visor member 36c functions as the peak part to prevent direct incidence of sunlight into the meter.

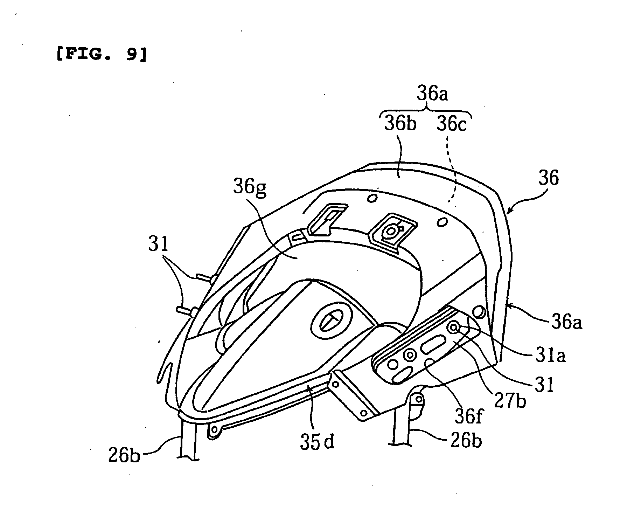

The meter unit 35 is disposed to enter the window 36g of the meter visor 36. Specifically, the cover part 35d of the meter unit 35 is positioned to enter a part in front of and above the window 36g (see FIGs. 9 and 13).

With such a construction, the meter visor 36 more certainly prevents direct incidence of sunlight and light of illumination lamps into the meter unit 35, and prevents light reflected on the meter unit 35 from being projected on the windshield 37.

The windshield 37 has a lower screen 38 disposed to cover the window 36g of the meter visor 36 and an upper screen 39 disposed to form a surface continued to and above the lower screen 38. Preferably, the cover part 35d is distanced from the lower screen 38.

The upper screen 39 is formed to be colorless transparent. The lower screen 38 is formed to have a less transmittance comparing with a transparent screen. If a rider views forward of the vehicle from the window 36g of the meter visor 36 through the lower screen 38, a rider can facilely view forward through since the forward sight is bright. On the other hand, if the lower screen 38 is viewed through from the outside of the vehicle, it is difficult to see the inside from the outside since the parts around the meter visor 36 including the window 36g are darker. Also, the transmittance of the lower screen 38 is lower than the upper screen 39. It is difficult to see a vehicle side from the outside for this reason also. Further, the upper screen 39 may be formed to have a transmittance less than a transparent screen.

A lower periphery of the upper screen 39 has a level difference 39a which an upper periphery 38a of the lower screen 38 engages to form a continuous surface, a central mounting part 39b continuing into the level difference 39a and extending to contact with an upper surface of the upper visor member 36b, right and left mounting parts 39d, 39d extending from both ends of the central mounting part 39b to contact with the rearview mirror support 27b, semi-circular recesses 39c, 39c formed on lower peripheries of the right and left mounting parts 39d to contact upper surfaces of the positioning bosses 31 a, 31 a of the right and left supporting bolts 31 described above.

The right and left mounting part 39d, 39d of the upper screen 39 are engaged with the positioning bosses 31 a. Front and rear parts of each of the right and left mounting parts 39d are fixed to the rearview mirror support 27 with resin bolts 41, 41. The central mounting part 39b is fixed to the screen support 27c with three metal bolts 40 together with the upper visor member 36b. The upper screen 39 is detachably mounted on the supporting stay 27 as described above.

The lower screen 38 is formed in a generally triangular shape such that a width in the vehicle width direction becomes smaller as progressing forward from the upper screen 39 as seen from the front of the vehicle. A front end 38b of the lower screen 38 extends toward boundaries of the right and left headlights 22a.

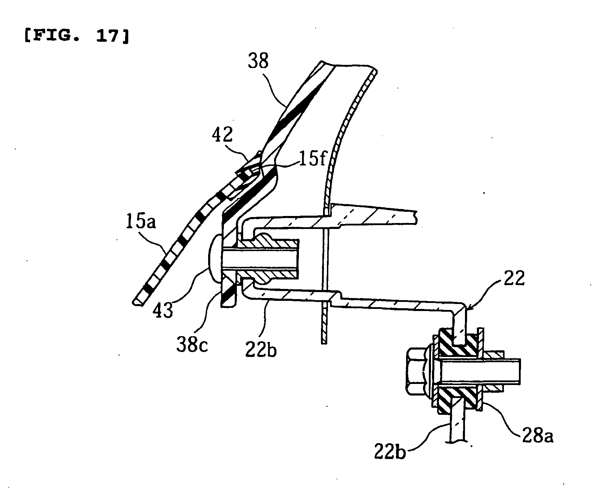

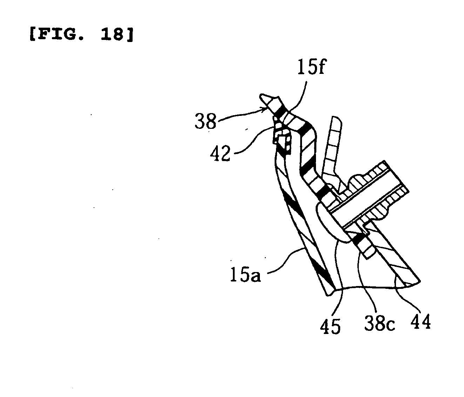

A generally V-shaped notch 15f extending along the lower screen 38 is formed in the outer cover 15a. A sealing member 42 contacting with the lower screen 38 is put on the notch 15f (see FIGs. 17 and 18).

Openings 38f, 38f are formed on parts of the lower screen 38 facing the right and left rearview mirror support 27b. A flange 38c extending into the outer cover 15a is formed in a lower periphery of the lower screen 38 through an entire length thereof.

A front end of the flange 38c of the lower screen 38 is fixed to a mounting part 22e formed to protrude forward on an upper periphery of the headlight unit 22 with a bolt 43. Each of right and left side parts of the flange 38c is fixed to the cowling body 44 with a pair of front and rear bolts 45, 45.

Right and left rear ends of the lower screen 38 are fixed to the right and left rearview mirror support 27b together with the upper screen 39 with the rear resin bolts 41. The resin bolts 41 are covered by the dustcovers 32c put on the rearview mirrors 32.

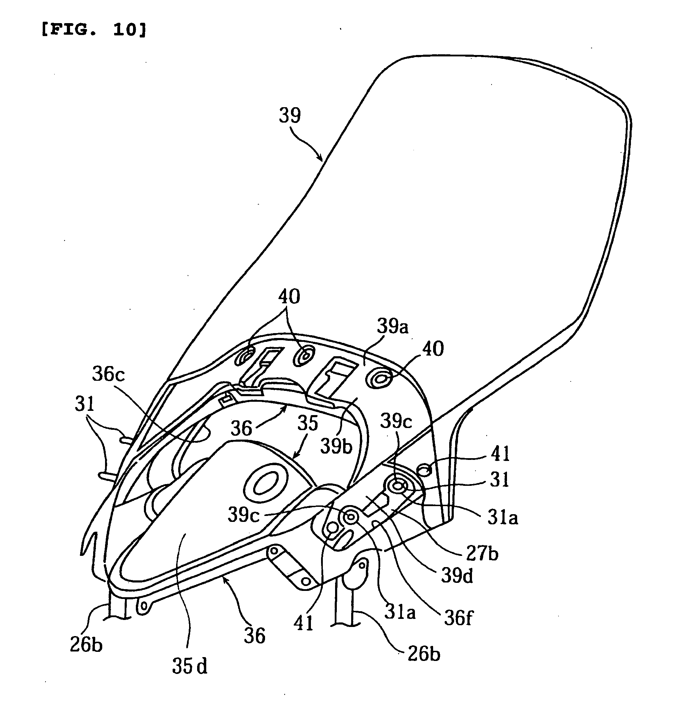

Now, a manner on how mountings of the upper screen 39 and the lower screen 38 are made will be described. First, the meter visor 36 is mounted on the frame member 25. While the right and left mounting parts 39d of the upper screen 39 are positioned to the positioning bosses 31 a, the front ends of the right and left mounting parts 39d are fixed to the rearview mirror support 27b by the resin bolts 41. Further, the central mounting part 39b is fixed to the screen support 27c with various metal bolts 40 together with the upper visor member 36b (see FIGs. 9 and 10).

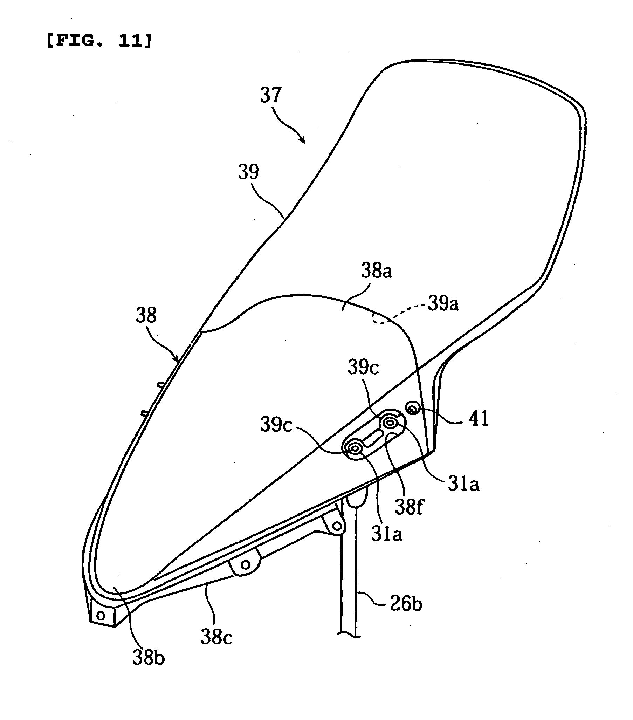

Next, the lower screen 38 is disposed in a manner such that the upper periphery 38a thereof is engaged with the level difference 39a of the upper screen 39. The front end of the flange 38c is fixed to the mounting part 22e of the headlight unit 22 by the bolt 43. The right and left sides of the flange 38c are fixed to the cowling body 44 by the bolts 45, 45. The right and left rear ends of the flange 38c are fixed to the right and left rearview mirror supports 27b together with the upper screen 39 by the resin bolts 41 (see FIG. 11).

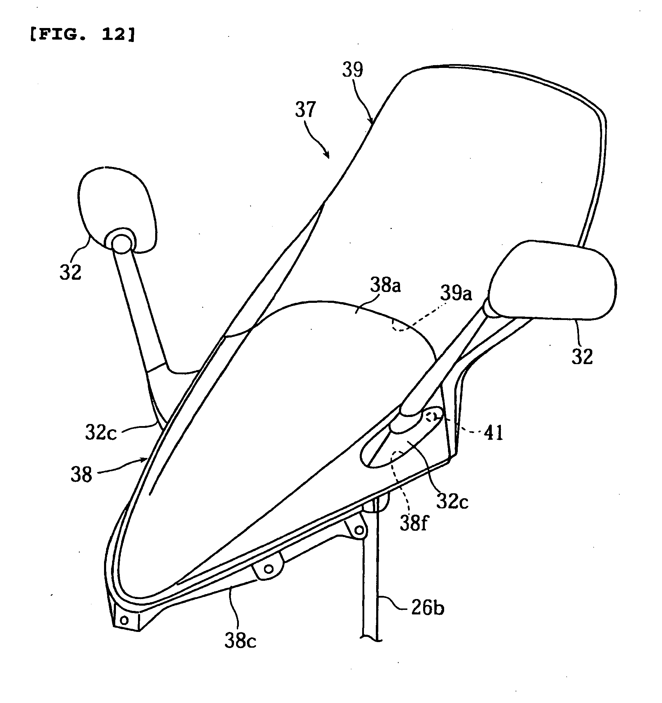

Thereafter, the front cover 15 is put on the lower screen 38 and mounted on the frame member 25. The right and left rearview mirrors 32 are mounted on the rearview mirror support 27b. The dustcovers 32c are put on the mounting holes 15d of the front cover 15 (see FIG. 12).

In this embodiment, the window 36g is formed on the part of the meter visor 36 above the meter unit 35. Therefore, the meter unit 35 can be disposed to enter the window 36g. The meter unit 35 can be disposed forward in the vehicle for the displacement of the meter unit 35 by means of the entering, that is, in a position apart from a rider. Thereby, the amount of eye movement of a rider can be made smaller in the case that the rider vertically moves his/her eyes for visually recognizing the meter unit 35 in traveling.

The window 36g generally in an elliptic shape extending in the vehicle width direction is provided in a part of the meter visor 36 in front of and above the meter unit 35. Therefore, it is seen as parts around the meter extend forward through the window 36g in a view of a rider. This improves an appearance around the meter.

In this embodiment, the window 36g of the meter visor 36 is covered by the lower screen 38. Therefore, this can prevent winds due to traveling from directly contacting with a rider while passing through the window 36g.

In this embodiment, a rider can view forward of the vehicle through the lower screen 38 from the window 36g, and this enhances visual recognition of the forward view of the vehicle. Further, this can give a rider a novel impression that he/she can make visual recognition of the forward view of the vehicle through the lower screen 38 from the window 36g of the meter visor 36.

In this embodiment, the lower screen 38 is formed to have a lower transmittance, comparing with a transparent screen. Therefore, it is difficult to see the inside of the window 36g through the lower screen 38 from the outside of the vehicle. This can prevents deterioration of an appearance from the outside.

In this embodiment, the windshield 37 is constructed with the separate bodies that are the lower screen disposed to cover the window 36g of the meter visor 36 and the upper screen disposed to form a continuous surface above the lower screen 38. Therefore, a degree of freedom in coloring can be improved in a manner such that the lower screen 38 is colored in an obscure color, for example. Accordingly, a novel appearance can be obtained.

The windshield 37 is separated into upper and lower parts. Therefore, this facilitates production, comparing with the case that a whole of the windshield is unitarily formed, and saves cost.

In this embodiment, the upper screen 39 is supported by the supporting stay 27 of the frame member 25. Therefore, supporting strength for the upper screen 39 can be certainly obtained, and oscillations and rattling sounds caused by winds due to traveling can be prevented.

The supporting stay 27 is covered around by the meter visor 36, that is, the meter visor 36 is used also as a cover member for covering around the supporting stay 27. Therefore, this prevents deterioration of an appearance due to exposure of the supporting stay 27 without adding special members.

In this embodiment, the supporting stay 27 is formed in a convex arch shape such that the screen support 27c at the center in the vehicle width direction is positioned above the right and left ends 27a. Therefore, the lower periphery of the upper screen 39 can be directly mounted along the screen support 27c. Accordingly, interposed members such as bracket are not required, to thereby reduce the number of parts.

In this embodiment, the right and left rearview mirror supports 27b are formed on the supporting stay 27. Therefore, the rearview mirrors 32 can be directly mounted on the supporting stay 27 on which the upper screen 39 is mounted. Accordingly, particular parts for mounting such as bracket are not required.

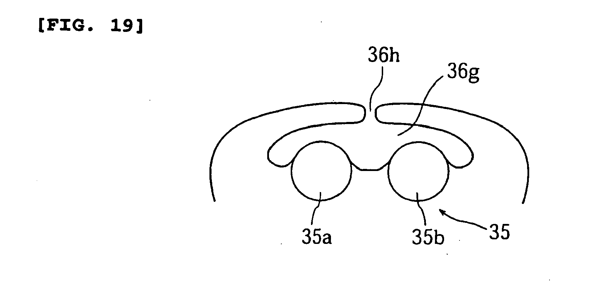

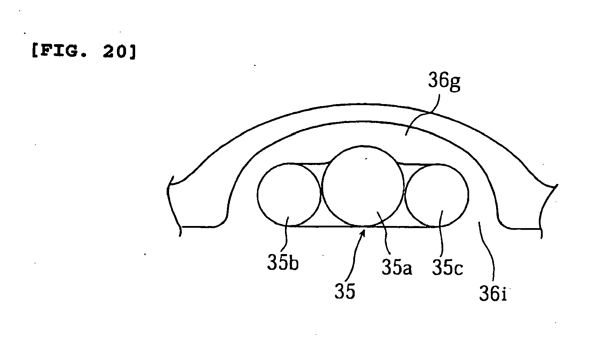

In this embodiment, descriptions are made about a case that the window of the meter visor has a circular shape surrounded by a ring-shaped periphery including the cover part. However, the shape and construction of the window according to the present teaching are not limited to the embodiments. For example, as shown in FIG. 19, in the case that the meter unit 35 is separated into the speedometer 35a and the tachometer 35b, a part of the window 36g may be opened with a slit 36h. As shown in FIG. 20, a lower part 36i of the window 36g may be opened without continuity to the meter unit 35, and only a part located above the meter unit 35 may be surrounded.

Further, in the present embodiments above, it is preferable that at least part of at least one of the speedometer, the tachometer, and various other display meters is disposed to enter the window 36g.

The description above discloses (among others) an embodiment of a straddle type vehicle comprising: a meter disposed in a front part of a vehicle body; and a peak-shaped meter visor disposed in front of the meter and extending upward of the meter, wherein the meter visor has a window in a position above the meter.

Accordingly, the meter visor has the window in a position above the meter, and thus the meter is disposed to enter the window of the meter visor. With this disposition, the meter is disposed in the front part of the vehicle apart from a rider. As a result, the amount of eye movement of a rider can be made smaller in the case that the rider moves his/her eyes to visually recognize the meter in traveling.

Thus, in general, an embodiment of a vehicle, in particular straddle type vehicle such as a motorcycle, comprising: a meter unit disposed in a front part of a body of the vehicle; and at least a portion of a meter visor disposed in viewing direction of a driver of the vehicle in front of the meter unit and extending upwardly of the meter unit, wherein the meter visor has a window in a position above the meter unit is disclosed.

Moreover, the window is provided in a part of the meter visor above the meter. Therefore, the driver feels as parts around the meter extend forward through the window in his or her view. This improves an appearance around the meter.

At least a part of the meter enters the window.

A cover is disposed to cover a front part of the window of the meter visor.

Further, preferably the cover is constructed in a manner such that a rider can view forward through the window.

Further, preferably the cover is an obscure cover formed to have a less transmittance comparing with a transparent cover.

According to another preferred aspect, the cover includes a lower screen disposed to cover the window of the meter visor and an upper screen disposed to form a surface continued to and above the lower screen.

Preferably, a supporting stay is provided for supporting the upper screen, wherein the supporting stay is covered around by the meter visor.

Further, preferably the supporting stay is formed into a convex arch shape in which a center part in the vehicle width direction is positioned above both ends.

Still further, preferably both the ends of the supporting stay construct a rearview mirror support.

## Claims

1. Vehicle, in particular straddle type vehicle such as a motorcycle, comprising:
a meter unit (35) disposed in a front part of a body of the vehicle; and
at least a portion of a meter visor (36) disposed in front of the meter unit (35) and extending upwardly of the meter unit (35),
**characterized in that**
the meter visor (36) has a window (36g) in a position above the meter unit (35), and at least a portion of the meter unit (35) enters the window (36g), and a cover is disposed to cover at least a front part of the window (36g) of the meter visor (36) in moving direction of the vehicle.

2. Vehicle according to claim 1, wherein a lower visor member (36c) of a visor main body (36a) of the meter visor (36) forms an arch shaped extending obliquely rearward and upward from right and left peripheries of a cover part (35d) from the meter unit (35), and is positioned to cover the meter unit (35) from its right and left sides and upside.

3. Vehicle according to claim 1 or 2, wherein the cover is constructed in a manner such that the driver can view forward through the window (36g).

4. Vehicle according to one of the claims 1 to 3, wherein the cover is an obscure cover with reduced transmittance.

5. Vehicle according to one of the claims 1 to 4, wherein the cover includes a lower screen (38) disposed to cover the window (36g) of the meter visor (36) and an upper screen (39) disposed to form a surface above the lower screen (38) and, preferably, continuous thereto.

6. Vehicle according to claim 5, wherein the transmittance of the lower screen (38) is lower than the transmittance of the upper screen (39).

7. Vehicle according to claim 5 or 6, wherein a supporting stay (27) is provided for supporting the upper screen (39), and wherein, preferably, the supporting stay (27) is covered around by the meter visor (36).

8. Vehicle according to claim 7, wherein the supporting stay (27) is formed into a substantially convex arch shape in which a center part (27c) in the vehicle width direction is positioned above both ends of the supporting stay (27).

9. Vehicle according to claim 8, wherein both the ends of the supporting stay (27) form rearview mirror supports (27b).

10. Vehicle according to one of the claims 1 to 9, wherein the meter unit (35) from its upside is covered by a cover part (35d) which, preferably, extends obliquely forward and downward.

11. Vehicle according to claim 10, wherein the cover part (35d) is distanced to the cover covering a front portion of the window (36g) of the meter visor (36).

## Patentansprüche

1. Fahrzeug, insbesondere Spreizsitz-Fahrzeug, wie beispielsweise ein Motorrad, das umfasst:
eine Messinstrument-Einheit (35), die in einem vorderen Teil einer Karosserie des Fahrzeugs angeordnet ist; und
wenigstens einen Abschnitt einer Messinstrument-Blende (36), der vor der Messinstrument-Einheit (35) angeordnet ist und sich von der Messinstrument-Einheit (35) nach oben erstreckt,
**dadurch gekennzeichnet, dass**
die Messinstrument-Blende (36) ein Fenster (36g) an einer Position oberhalb der Messinstrument-Einheit (35) hat und wenigstens ein Abschnitt der Messinstrument-Einheit (35) in das Fenster (36g) eintritt, und eine Abdeckung so angeordnet ist, dass sie wenigstens einen vorderen Teil des Fensters (36g) der Messinstrument-Blende (36) in Bewegungsrichtung des Fahrzeugs abdeckt.

2. Fahrzeug nach Anspruch 1, wobei ein unteres Blendenelement (36c) eines Blenden-Hauptkörpers (36a) der Messinstrument-Blende (36) einen Bogen bildet, der so geformt ist, dass er sich vom rechten und vom linken Rand eines Abdeckungsteils (35d) von der Messinstrument-Einheit (35) schräg nach hinten und nach oben erstreckt, und es so positioniert ist, dass es die Messinstrument-Einheit (35) von ihrer rechten und linken Seite sowie von der Oberseite her abdeckt.

3. Fahrzeug nach Anspruch 1 oder 2, wobei die Abdeckung so aufgebaut ist, dass der Fahrer durch das Fenster (36g) nach vorn sehen kann.

4. Fahrzeug nach einem der Ansprüche 1 bis 3, wobei die Abdeckung eine dunkle Abdeckung mit verringertem Durchlässigkeitsgrad ist.

5. Fahrzeug nach einem der Ansprüche 1 bis 4, wobei die Abdeckung eine untere Scheibe (38), die so angeordnet ist, dass sie das Fenster (36g) der Messinstrument-Blende (36) abdeckt, sowie eine obere Scheibe (39) enthält, die so angeordnet ist, dass sie eine Fläche oberhalb der unteren Scheibe (38) bildet und sich vorzugsweise daran anschließt.

6. Fahrzeug nach Anspruch 5, wobei der Durchlässigkeitsgrad der unteren Scheibe (38) niedriger ist als der Durchlässigkeitsgrad der oberen Scheibe (39).

7. Fahrzeug nach Anspruch 5 oder 6, wobei eine Stützstrebe (27) zum Tragen der oberen Scheibe (39) vorhanden ist und die Stützstrebe (27) vorzugsweise von der Messinstrument-Blende (36) umgeben ist.

8. Fahrzeug nach Anspruch 7, wobei die Stützstrebe (27) in einer im Wesentlichen konvexen Bogenform ausgebildet ist, bei der ein Mittelteil (27c) in der Fahrzeugbreitenrichtung oberhalb beider Enden der Stützstrebe (27) positioniert ist.

9. Fahrzeug nach Anspruch 8, wobei beide Enden der Stützstrebe (27) Rückspiegel-Träger (27b) bilden.

10. Fahrzeug nach einem der Ansprüche 1 bis 9, wobei die Messinstrument-Einheit (35) von ihrer Oberseite her durch einen Abdeckungsteil (35d) abgedeckt wird, der sich vorzugsweise schräg nach vorn und nach unten erstreckt.

11. Fahrzeug nach Anspruch 10, wobei der Abdeckungsteil (35d) in Abstand zu der Abdeckung liegt, die von einem vorderen Abschnitt des Fensters (36g) der Messinstrument-Blende (36) beabstandet ist.

## Revendications

1. Véhicule, en particulier un véhicule à enfourcher tel qu'un motocycle, comprenant :
une unité d'instrument de mesure (35) disposée dans une partie avant d'un corps du véhicule ; et
au moins une partie d'une visière d'appareil de mesure (36) disposée devant l'unité d'instrument de mesure (35) et s'étendant vers le haut de l'unité d'instrument de mesure (35),
**caractérisé en ce que**
la visière d'appareil de mesure (36) comporte une fenêtre (36g) dans une position au-dessus de l'unité d'instrument de mesure (35), et au moins une partie de l'unité d'instrument de mesure (35) entre dans la fenêtre (36g), et un carénage est disposé pour recouvrir au moins une partie avant de la fenêtre (36g) de la visière d'appareil de mesure (36) dans la direction de déplacement du véhicule.

2. Véhicule selon la revendication 1, dans lequel un élément de visière inférieur (36c) d'un corps principal de visière (36a) de la visière d'appareil de mesure (36) forme une arche s'étendant obliquement vers l'arrière et vers le haut à partir de périphéries droite et gauche d'une partie de couverture (35d) à partir de l'unité d'instrument de mesure (35), et est positionné pour recouvrir l'unité d'instrument de mesure (35) à partir de ses côtés droit et gauche et de son côté supérieur.

3. Véhicule selon la revendication 1 ou 2, dans lequel le carénage est construit de manière telle que le conducteur puisse voir vers l'avant à travers la fenêtre (36g).

4. Véhicule selon une des revendications 1 à 3, dans lequel le carénage est un carénage obscurci avec un facteur de transmission réduit.

5. Véhicule selon une des revendications 1 à 4, dans lequel le carénage comprend un écran inférieur (38) disposé pour recouvrir la fenêtre (36g) de la visière d'appareil de mesure (36) et un écran supérieur (39) disposé pour former une surface au-dessus de l'écran inférieur (38) et, de préférence, continue par rapport à celui-ci.

6. Véhicule selon la revendication 5, dans lequel le facteur de transmission de l'écran inférieur (38) est inférieur au facteur de transmission de l'écran supérieur (39).

7. Véhicule selon la revendication 5 ou 6, dans lequel un montant de support (27) est prévu pour supporter l'écran supérieur (39), et dans lequel, de préférence, le montant de support (27) est recouvert tout autour par la visière d'appareil de mesure (36).

8. Véhicule selon la revendication 7, dans lequel le montant de support (27) présente une forme d'arche sensiblement convexe dans laquelle une partie centrale (27c) dans la direction de la largeur du véhicule est positionnée au-dessus des deux extrémités du montant de support (27).

9. Véhicule selon la revendication 8, dans lequel les deux extrémités du montant de support (27) forment des supports de rétroviseur (27b).

10. Véhicule selon une des revendications 1 à 9, dans lequel l'unité d'instrument de mesure (35), à partir de son côté supérieur, est recouverte par une partie de couverture (35d) qui, de préférence, s'étend obliquement vers l'avant et vers le bas.

11. Véhicule selon la revendication 10, dans lequel la partie de couverture (35d) est éloignée par rapport au carénage recouvrant une partie avant de la fenêtre (36g) de la visière d'appareil de mesure (36).
